(19) **Europäisches Patentamt**
**European Patent Office**
**Office européen des brevets**

(11) **EP 2 587 090 B1**

(12) **EUROPEAN PATENT SPECIFICATION**

(45) Date of publication and mention
of the grant of the patent:
**29.11.2017 Bulletin 2017/48**

(51) Int Cl.:
***F16G 5/18*** *(2006.01)*

(21) Application number: **12190513.7**

(22) Date of filing: **30.10.2012**

(54) **Chain-Type Continuously Variable Transmission**

Kettenartiges durchgehendes variables Getriebe

Transmission variable en continu de type à chaîne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2011 JP 2011239442**

(43) Date of publication of application:
**01.05.2013 Bulletin 2013/18**

(73) Proprietor: **JTEKT Corporation
Osaka-shi, Osaka 542-8502 (JP)**

(72) Inventors:
 • **NAKAZAWA, Teruhiko
 Nagakute-shi, Aichi 480-1192 (JP)**
 • **TARUTANI, Ichiro
 Nagakute-shi, Aichi 480-1192 (JP)**

 • **NAGASAWA, Yuji
 Nagakute-shi, Aichi 480-1192 (JP)**
 • **HATTORI, Haruhiro
 Nagakute-shi, Aichi 480-1192 (JP)**
 • **YAMANE, Shinji
 Osaka-shi, Osaka 542-8502 (JP)**
 • **MORI, Keisuke
 Osaka-shi, Osaka 542-8502 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(56) References cited:
**EP-A1- 1 845 286     EP-A1- 2 034 215
EP-A1- 2 090 805     EP-A2- 1 862 700**

**Description**

The present invention relates to a chain-type continuously variable transmission (CVT), and more particularly to noise suppression thereof.

Continuously variable transmissions (CVTs) including two pulleys each having opposing conical surfaces, the distance therebetween being variable, and a flexible endless member which is wrapped around the two pulleys, are known. The rotation of one pulley is transmitted to the other pulley through the flexible endless member. At this time, varying the distance between the conical surfaces varies the wrapping radius of the flexible endless member with respect to the pulley, thereby allowing the transmission ratio to vary. JP 7-167224 A (hereinafter referred to as Patent Document 1) discloses a chain for use as a flexible endless member of a continuously variable transmission.

The chain disclosed in Patent Document 1 is formed by coupling a plurality of chain elements. Each chain element includes a link unit and two pins. The link unit is formed by arranging a plurality of plate-shape links in the width direction of the chain, each link having an opening and placed to extend in the circumferential direction of the chain. The pins extend through the opening of the respective links at both ends of the link and come into contact with the conical surfaces at the respective ends of the pin. The interconnection between the chain elements is achieved by allowing the pin of one of adjoining chain elements to pass through the opening of the link of the other chain element.

In a continuously variable transmission in which such a chain is used, when the pin of the chain bites into the pulley, impacts arise, and with the impacts acting as a vibratory force, noise is generated. In particular, the vibratory force in the band of 3 to 5 kHz, in which a characteristic value of a transmission system of the components such as the pulley or a shaft supporting the pulley exists, causes noise. When the pins are arranged at uniform intervals, vibration having its peak at the biting frequency of the pin and the high-order frequency thereof occurs. Patent Document 1 describes a technique of suppressing the resonance vibration by making the arrangement pitch of the pins in the circumferential direction of the chain nonuniform, to thereby disperse the vibration peak.

EP 1 862 700 A2 discloses a chain drive comprising all the features of the preamble of claim 1. Specifically EP 1 862 700 A2 discloses a chain drive, especially for a vehicle transmission, that has profiled thrust elements linking the chain elements and located inside the chain. The thrust elements have profiled thrust surfaces to provide a rolling contact with the flanged drive wheels around which chain is looped. The outer ends of the thrust elements are profiled to provide friction contact with the flanged drive wheels with the upper part of the thrust surfaces.

EP 2 034 215 A1 discloses a transmission chain with links coupled by rocker assemblies with each two longitudinal pins which roll over each other and of which one cooperates in a force transmitting way with the opposite pulleys of a pair of cone-shaped pulley sheaves, and these pins have a first dimension in the longitudinal direction, a second dimension perpendicular to the longitudinal direction and to the running direction of the chain and a third dimension perpendicular to the longitudinal direction and the running direction, in which for each value of the first dimension both other dimensions are such that the ratio between this dimension and each of the other dimensions, is, taking into account the expected loading of the chain, as small as possible.

EP 2 090 805 A1 discloses a power transmission chain in which noises and vibrations are further reduced by modifying a shape of a rolling contact face and an offset amount of a pin which would affect a contact shape of an end face of the pin, and a power transmission device provided with the same. A pin of which a rolling contact face is formed as an involute curve includes two types having different radiuses Rb of the involute curve, and two types of offset amounts are set with respect to a shape of an end face of the pin to be contacted with a conical face of a pulley. Combination of larger and smaller radiuses Rb of the involute curve and larger and smaller offset amounts with respect to the pin is limited to either of three combinations, namely, the larger Rb-the larger offset, the larger Rb-the smaller offset, and the smaller Rb-the smaller offset.

EP 1 845 286 A1 discloses a chain which includes plural links and plural pairs of first and second pins to couple the links each other. The first pin comes into rolling and sliding contact with the second pin at the contact portion. The first pin includes a pair of end faces opposing each other in the chain width direction, and a contact region that comes into contact with the corresponding sheave surfaces of the pulley is formed in each end face. The contact region includes the center point of contact. The first pin includes a first type pin and a second type pin. When the linear region of the chain is viewed in the chain width direction, the relative position of the contact portion and the center point of contact is different between the first type pin and the second type pin.

By dispersing the peaks of vibration by arranging the pins at nonuniform pitch, it is possible to reduce the order component itself. In this case, however, vibration components in portions of the frequency band of 3 to 5 kHz, in which the characteristic value of the transmission system exists, other than the order components increase, which generates sounds, resulting in high-frequency noise. (Hereinafter, the noise which is generated as described above will be referred to as "shah-shah noise" for the sake of explanation).

The present invention is aimed at reducing the noise of high-order components in 3 to 5 kHz and the shah-shah noise. The aim is achieved by a continuously variable transmission according to the features of claim 1. Advantageous further developments are subject-matter of the dependent claims.

The continuously variable transmission (CVT) according to the present invention is a chain-type CVT including two pulleys each having opposing conical surfaces, the distance therebetween being variable, and a chain which is wrapped around these two pulleys and is clamped between the conical surfaces. Here, the conical surface includes both a conical surface whose generatrix is a straight line and a substantially conical surface which is a slightly expanded or recessed shape with the generatrix being a curved line such as an arc. The chain is formed by coupling chain elements each including a link unit in which a plurality of plate-shape links, each having an opening and placed to extend in the circumferential direction of the chain, are arranged in the width direction of the chain, and two pins extending through the opening of the respective links at both ends of the link, in which the chain elements are interconnected such that the pin of one chain element of the two chain elements adjacent in the chain circumferential direction passes through the opening of the link of the other chain element. At least one of the two pins comes into contact with the conical surfaces of the pulley at the respective ends. In order to reduce the impacts generated when the pin bites into the pulley, the pin is made to deform easily in the center axis direction of the pin. More specifically, when the pin is clamped by the pulley, the deformation ratio of the pin length is defined as $\Delta L/(F \times L)$, wherein L is the free length of the pin along the centre line thereof; $\Delta L$ is the quantity of variation in the length of the pin; and F is the load from the pulley in the center line direction of the pin. The deformation ratio is $1.3 \times 10^{-6}$ (1/N) or greater.

In order to allow the pin to deform easily, it is possible to shift the position of a contact point between the pin and the conical surface of the pulley toward the outer side in the radial direction of the pulley, for example. With this shift, the pin bends when clamped by the pulley, thereby increasing the deformation of the pin in the center axis direction.

Preferably, the deformation ratio of the pin is $2.3 \times 10^{-6}$ (1/N) or smaller in consideration of durability.

Further, according to another embodiment of the present invention, it is possible to shift the position of the contact point between the pin and the conical surface of the pulley toward the outer side in the radial direction of the pulley by an amount of 0.16 or greater from the center of the pin, assuming that the dimension of the pin in the radial direction of the pulley is 1. Further, in consideration of durability, it is preferable that the ratio of the shift quantity from the pin center with respect to the dimension of the pin in the radial direction of the pulley (hereinafter referred to as a shift ratio) is 0.38 or less.

By allowing the pin to deform easily in the center axis direction of the pin, the impacts that arise when the pin bites the pulley are dampened to thereby reduce the high-order components of the vibratory force.

BRIEF DESCRIPTION OF THE DRAWINGS

Preferred embodiments of the present invention will be described in detail based on the following figures, wherein:

FIG. 1 is a view illustrating a principal portion of a chain-type continuous variable transmission;
FIG. 2 is a side view illustrating the structure of a chain;
FIG. 3 is a perspective view for explaining the structure of a chain;
FIG. 4 is a plan view illustrating the structure of a chain;
FIG. 5 is a view for explaining deformation of a pin;
FIG. 6 is a view indicating a variation of the frequency distribution of the vibratory force when a deformation quantity of a pin is varied;
FIG. 7 is a view illustrating details of a contact state between a pin and a pulley;
FIG. 8 is a view illustrating a relationship between the deformation ratio of a pin length and the sound pressure (OA value) of 3 to 5 kHz; and
FIG. 9 is a view illustrating a relationship between the shift ratio of a contact point and the sound pressure (OA value) of 3 to 5 kHz.

DESCRIPTION OF EMBODIMENTS

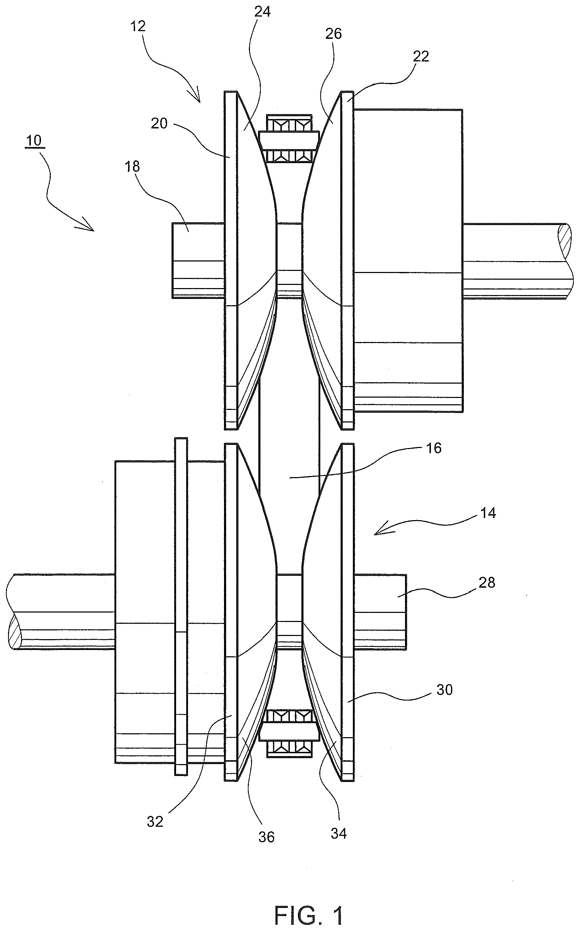

Preferred embodiments of the present invention will be described in detail with reference to the accompanying drawings. FIG. 1 illustrates a principal portion of a chain-type continuously variable transmission (CVT) 10. The chain-type CVT 10 includes two pulleys 12 and 14, and a chain 16 which is wrapped around these pulleys. One of the two pulleys will be referred to as an input pulley 12 and the other will be referred to as an output pulley 14. The input pulley 12 includes a fixed sheave 20 which is fixed to an input shaft 18 and a movable sheave 22 which is movable on the input shaft 18 by sliding along the input shaft 18. A surface of the fixed sheave 20 and a surface of the movable sheave 22 that are opposite each other have a shape of a substantially lateral surface of a cone. As illustrated, these substantially cone lateral surfaces are surfaces formed so as to expand with respect to the lateral surface of a cone. These surfaces will be referred to as substantially conical surfaces 24 and 26. These substantially conical surfaces 24 and 26 together form a V-shaped groove, in which the chain 16 is disposed such that side surfaces of the chain 16 are clamped between the substantially conical surfaces 24 and 26. Similar to the input pulley 12, the output pulley 14 includes a fixed sheave 30 which is fixed to an output shaft 28 and a movable sheave 32 which is movable on the output shaft 28 by sliding along the output shaft 28. A surface of the fixed sheave 30 and a surface of the movable sheave 32 that are opposite each other have a shape of a substantially lateral surface of a cone. As illustrated, these substantially cone lateral surfaces are surfaces formed so as to expand with respect to the lateral surface of a cone. These surfaces will be referred to as substantially conical surfaces 34 and 36. These substantially conical surfaces 34 and 36 together form a V-shaped groove, in which the chain 16 is disposed such that side surfaces of the chain 16 are clamped between the substantially conical surfaces 34 and 36.

The arrangement of the fixed sheave and the movable sheave is reversed between the input pulley 12 and the output pulley 14. Specifically, the movable sheave 22 is located on the right side in FIG. 1 in the input pulley 12, whereas the movable sheave 32 is located on the left side in the output pulley 14. By sliding the movable sheave 22 or 32, the distance between the opposing substantially conical surfaces 24 and 26, or 34 and 36 varies, which then varies a width of the V-shaped groove formed by these substantially conical surfaces. With the variation of the groove width, the chain wrapping radius also varies. More specifically, when the movable sheave 22, 32 moves away from the fixed sheave 20, 30, the groove width increases, so that the chain 16 moves to a deeper position in the groove to thereby decrease the wrapping radius. Conversely, when the movable sheave 22, 32 comes toward the fixed sheave 20, 30, the groove width decreases, so that the chain 16 moves to a shallow depth position in the groove to thereby increase the wrapping radius. As the variation of the wrapping radius is reversed between the input pulley 12 and the output pulley 14, the chain 16 is prevented from being loosened. With the sliding of the movable sheave 22, 32, the width of the V-shaped groove varies continuously, which results in continuous variation of the wrapping radius. As such, the transmission ratio during transmission from the input shaft 18 to the output shaft 28 can be varied continuously.

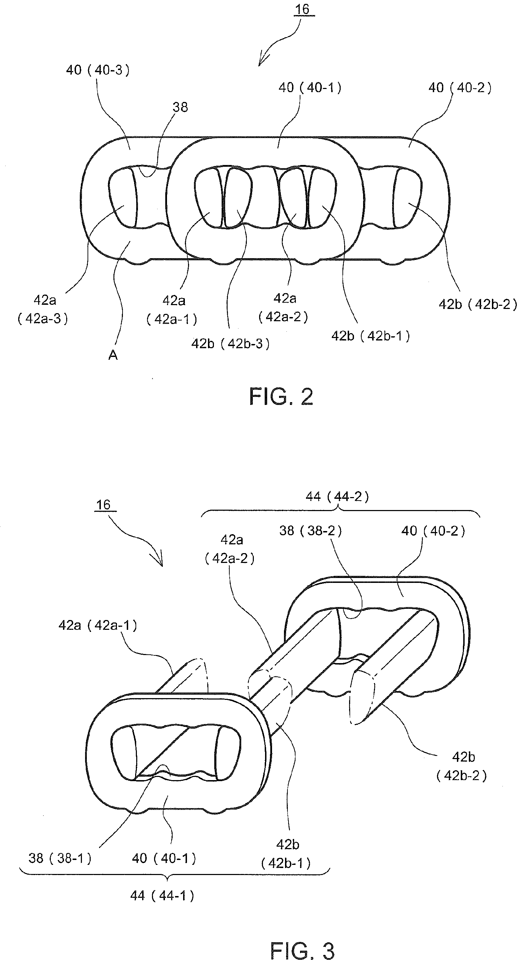

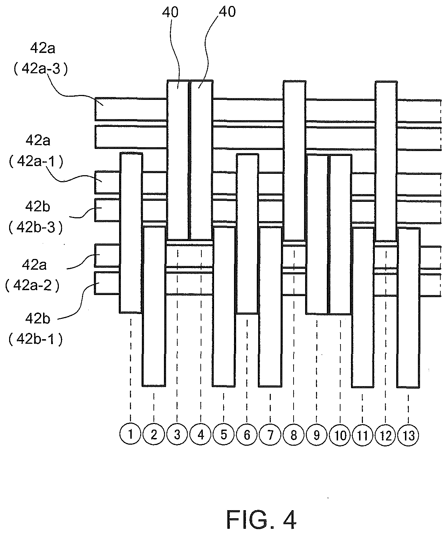

FIGs. 2 to 4 illustrate details of the chain 16. In the following description, the direction along the extending direction of the chain 16 will be referred to as a circumferential direction, and the direction which is orthogonal to the circumferential direction and is parallel to the input shaft 18 and the output shaft 28 will be referred to as a width direction, and the direction which is orthogonal to the circumferential direction and the width direction will be referred to as a thickness direction. FIG. 2 is a view illustrating a portion of the chain 16 seen from the width direction; FIG. 3 is a view illustrating a part of the chain 16 which is extracted and decomposed; and FIG. 4 is a view illustrating a portion of the chain 16 seen from the outer peripheral side in the thickness direction.

In FIG. 2, the left-right direction corresponds to the circumferential direction, and the top-down direction corresponds to the thickness direction. The chain 16 is formed of a combination of a plate-shape link 40 having an opening 38 and rod-shaped pins 42a and 42b. The individual links 40 have the same shape, including the same thickness, and the rod-shaped pins 42a have the same shape and the rod-shaped pins 42b have the same shape. The links 40 are arranged in a predetermined pattern (see FIG. 4) in the width direction, and two pins 42a and 42b extend through the opening 38 at both ends of the link. Both ends of the two pins 42a and 42b, or both ends of either one pin, come into contact with the conical surfaces 24 and 26, 34 and 36 of the input and output pulleys 12 and 14. A set of the two pins 42a and 42b and the links through which these two pins 42a and 42b extend will be referred to a chain element 44. FIG. 3 illustrates two chain elements 44-1 and 44-2. Here, the suffix "-1", "-2", "-3" ... is used to discriminate a chain element, and links and pins included in the chain element, from those of other chain elements. The chain element 44-1 is composed of a plurality of links 40-1 and the two pins 42a-1 and 42b-1 extending through the links 40-1. The two pins 42a-1 and 42b-1 are press fitted into or fixed and bonded to the opening 38-1 at the respective ends of the link 40-1. Similarly, the chain element 44-2 is composed of a plurality of links 40-2 and the two pins 42a-2 and 42b-2 extending therethrough. Further, the whole links 40 included in one chain element will be referred to as a link unit 46. The suffix "-1", "-2", "-3" ... described above is also used for the link unit 46 when it is necessary to discriminate the chain elements included in the link unit 46.

The chain elements 44-1 and 44-2 which are adjacent to each other can be interconnected by allowing the pin 42 of one chain element to pass through the opening 38 in the other chain element and vice versa. As illustrated in FIG. 3, the pin 42b-1 of the chain element 44-1 on the left side of the drawing is placed within the opening 38-2 so as to be positioned on the right side of the pin 42a-2 of the chain element 44-2 on the right side. Conversely, the pin 42a-2 of the chain element 44-2 on the right side is placed within the opening 38-1 so as to be positioned on the left side of the pin 42b-1 of the chain element 44-1 on the left side. These two pins 42b-1 and 42a-2 engage together to transmit a tension of the chain 16. For bending the chain 16, adjacent pins; e.g., pins 42b-1 and 42a-2, move in such a manner that they roll on mutual contact surfaces, so that bending can be allowed. Chain elements including the pins 42a and 42b arranged at several different intervals are prepared, and these chain elements with different pin intervals are arranged at random and coupled. Thus, the arrangement pitch of the pins in the circumferential direction of the chain is a random pitch.

FIG. 4 illustrates links 40, and pins 42a and 42b, that are included in three chain elements 44. In FIG. 4, chain elements adjacent to these three chain elements are omitted. A plurality of links 40 are arranged in the width direction (in the left-right direction in FIG. 4) and are also disposed to extend in the circumferential direction so as to be displaced from each other as appropriate. With this arrangement, the chain elements 44 are connected in series in the circumferential direction to thereby form one chain. The arrangement of the links 40 as illustrated is one example and other arrangements may be adopted.

During the operation of the chain-type CVT, both or either one of the pins 42a and 42b repeat a state in which the pin is clamped by the input pulley 12 or the output pulley 14 and a state in which the pin is released from the pulley. The pin, when clamped by the pulley 12 or 14, deforms in the center axis direction of the pin due to a load from the pulley 12 or 14. If this deformation is great, impacts that arise when the pin bites into the pulley decrease, advantageously reducing the high-order components of the vibratory force. In the following description, for the sake of simplicity, the pins 42a and 42b will be collectively designated by reference numeral 42 and description will be made only regarding the input pulley 12.

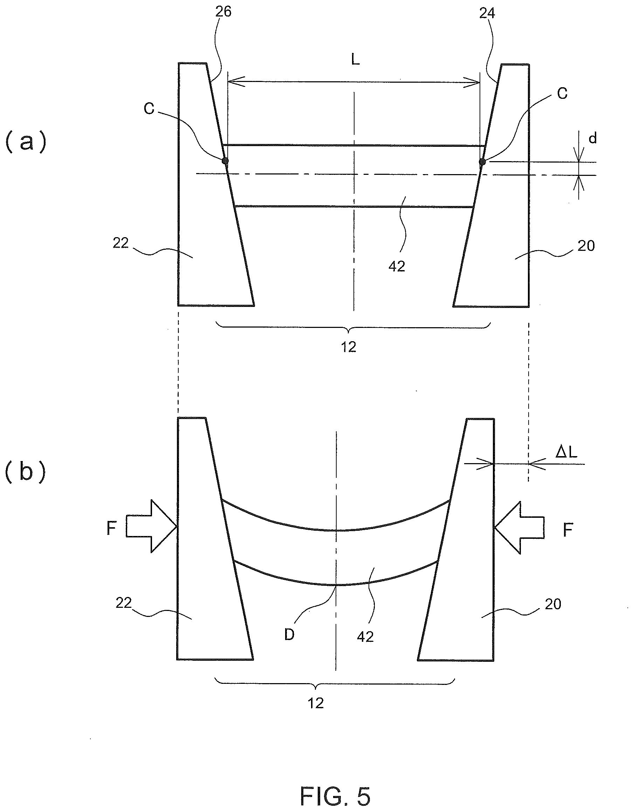

FIG. 5 is a view for explaining deformation of the pin 42. In a state in which no force is applied to the pin 42 from the two sheaves 20 and 22 of the input pulley 12, the length of the pin 42 along the center line thereof (free length) is L (see FIG. 5(a)). When the pin 42 is clamped between the sheaves 20 and 22 with a load F, the pin 42 bends toward the inner side in the radial direction of the pulley, making the length of the pin 42 in the center axis direction shorter, as illustrated in FIG. 5(b). The quantity of variation in the length of the pin 42 at this time is assumed to be $\Delta L$. Here, a value which is obtained by dividing this variation quantity of length $\Delta L$ by the load and the free length L of the pin is defined as a deformation ratio of pin length, and the deformation quantity of the pin is normalized.

$$\text{(deformation ratio of pin length)} = \Delta L/(F \times L)$$

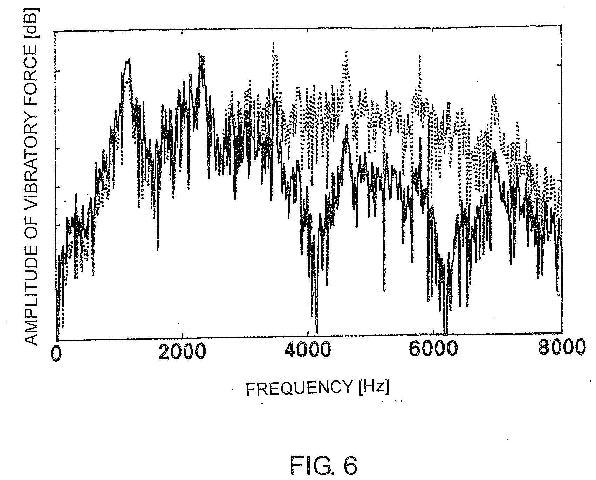

FIG. 6 is a view illustrating a calculation result obtained by comparing the frequency characteristics of the vibratory force between different deformation quantities of a pin, and illustrates the frequency distribution in the case of the same rotation rate. In FIG. 6, the graph indicated by a solid line concerns a case in which the deformation quantity of the pin is twice that of the case indicated by a broken line. As illustrated, it can be recognized that, with the increase in the deformation quantity of the pin, an advantage that high-order components, and more particularly, third-order components or higher order components, can be reduced, which is advantageous in the 3 kHz or higher range that affects the shah-shah noise, particularly in the band of 3 to 5 kHz.

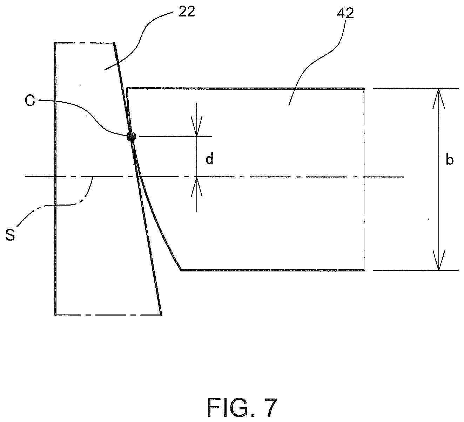

In the present embodiment, in order to vary the deformation quantity of the pin, the position of a contact point between the pin 42 and the substantial conical surface 24, 26 of the sheave is shifted from the center. As the end surface of the pin 42 is slightly curved, by shifting the position of the apex of this curved shape, the position of the contact point can be varied. As illustrated in FIG. 7, the position of the contact point C between the pin 42 and the sheave 22 is defined as a distance d from the center axis s passing through a center of a dimension b of the pin 42 in the radial direction of the pulley. Further, a value obtained by dividing the shift quantity d by the dimension b is assumed to be a shift ratio, which is represented as follows:

$$\text{(shift ratio)} = d/b$$

Here, the shift on the upper side with respect to the center line of the pin in the drawing will be assumed to be a plus shift and the shift on the lower side will be assumed to be a minus shift.

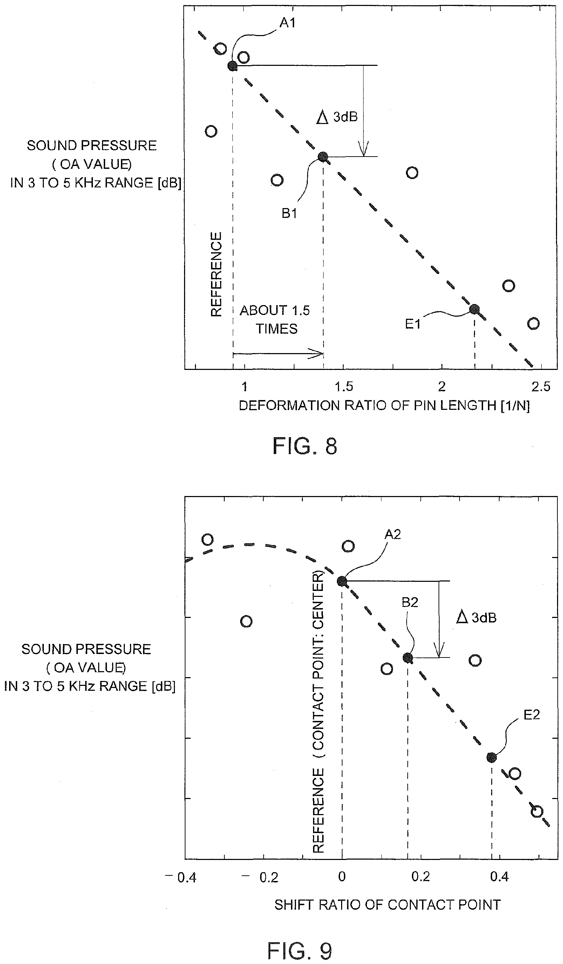

FIG. 8 is a view illustrating a relationship between the deformation ratio of the pin and the sound pressure level (OA value) in the frequency band of 3 to 5 kHz. In FIG. 8, blank circles indicate measured values and a broken line represents first-order approximation thereof. It can be understood that, concerning the actually measured values, the sound pressure level is similarly lowered with the increase in the deformation ratio of the pin length. The case with a reference deformation ratio is indicated by point A1, and in order to achieve a point B1 in which the sound pressure in the case of A1 is reduced by 3dB, it is necessary to make the deformation ratio of the pin about $1.3 \times 10^{-6}$ (1/N), which is about 1.5 times that in the case of A1. Here, 3dB is a value for which one can recognize the noise improvement in the auditory sense. Also, the measured values of noise were obtained under the conditions that the transmission ratio was 1, no load was applied, the input rotation speed was set to 700 to 3000 rpm, and a pulley clamping force corresponding to a low load was applied.

When the pin 42 is deformed in the length direction thereof, with the increase in the deformation quantity, a stress generated in the pin 42 also increases. In the case in which the pin 42 is bent as illustrated in FIG. 5(b) to cause deformation in the length direction, a stress at the time of deformation is high at a portion in the center of the pin 42 on the inner side in the radial direction of the pulley (which is indicated by D in FIG. 5(b)). While the pin 42 deforms when it is clamped by the input and output pulleys 12 and 14, the pin 42 does not deform when it is located between the input and output pulleys 12 and 14, because no load acts thereon. As such, the stress acting on the pin results in a repeated load, causing a problem of fatigue resistance. The deformation ratio of the pin length with which the fatigue resistance is at the upper limit is 2.3 x $10^{-6}$ (1/N). In FIG. 8, a point E1 is the upper limit value in consideration of this fatigue resistance.

By setting the deformation ratio of the pin length in the range of 1.3 to 2.3 x $10^{-6}$ (1/N), it is possible to satisfy the requirements for the noise reduction in the band of 3 to 5 kHz and for the fatigue resistance.

FIG. 9 is a view illustrating a relationship between the position of a contact point C (shift ratio) and the sound pressure level (OA value) in the frequency band of 3 to 5 kHz. In FIG. 9, blank circles indicate measured values and a broken line represents an approximate curve. The case in which the contact point C is located on the center line s is indicated by point A2, and in order to achieve a point B2 in which the sound pressure in the case of A2 is reduced by 3dB, it is necessary to make the shift ratio 0.16. The measured values of noise were obtained under the conditions that the transmission ratio was 1, no load was applied, the input rotation rate was set to 700 to 3000 rpm, and a pulley clamping force corresponding to a low load was applied. By setting the shift ratio to the range on the right side of the point B2; i.e., to about 0.16 or greater, it is possible to expect the improvement of the noise by 3dB or more in the OA values in the 3 to 5 kHz band compared to the case where the contact point C is located on the center line of the pin.

Here, with the increase of the shift ratio, the deformation of the pin 42 increases when the pin 42 is clamped by the input and output pulleys 12 and 14, leading to a problem of fatigue resistance. The shift ratio with which the fatigue resistance is the upper limit is about 0.38. In FIG. 9, the point E2 is an upper limit value in consideration of this fatigue resistance.

By setting the shift ratio of the contact point C to the range between 0.16 and 0.38, it is possible to satisfy the requirements for the noise reduction in the band of 3 to 5 kHz and for the fatigue resistance.

While the example in which the pins are arranged at a random pitch in the circumferential direction of the chain has been described above, by allowing the pin to deform easily, the peak of the high-order components in the band of 3 to 5kHz can be similarly reduced in the case in which the pins are arranged at uniform pitch, thereby achieving an advantage of noise reduction.

While the preferred embodiment of the present invention has been described using specific terms, such description is for illustrative purposes only, and it is to be understood that changes and variations may be made without departing from the scope of the appended claims.

**Claims**

1. A continuously variable transmission (10) comprising:

   two pulleys (12, 14), each having opposing conical surfaces (24, 26; 34, 36) with a distance therebetween being variable; and
   a chain (16) which is wrapped around the two pulleys (12, 14) and is clamped between the conical surfaces (24, 26; 34, 36),
   wherein
   the chain (16) is formed by coupling chain elements (44), each chain element including a link unit in which a plurality of links each having an opening (38) and placed to extend in a circumferential direction of the chain (16) are arranged in a width direction of the chain (16) and two pins (42) which extend through the opening (38) of the respective links at both ends of the link, both ends of at least one pin (42) coming into contact with the conical surfaces (24, 26; 34, 36), in which the chain elements (44) are coupled such that the pin of one of two chain elements (44) that are adjacent to each other in the circumferential direction of the chain (16) is made to pass through the opening (38) of the link of the other chain element, and
   when the pin (42) is clamped by the pulley (12, 14), a deformation ratio of pin length is defined as $\Delta L/(F \times L)$, wherein:

      L is the free length of the pin (42) along the centre line thereof;
      $\Delta L$ is the quantity of variation in the length of the pin (42); and
      F is the load from the pulley (12, 14) in the center line direction of the pin (42), **characterized in that** the deformation ratio is 1.3 x $10^{-6}$ (1/N) or greater.

2. The continuously variable transmission (10) according to Claim 1, wherein the pins (42) are arranged at a random pitch in the circumferential direction of the chain (16).

3. The continuously variable transmission (10) according to Claim 1 or 2, wherein the deformation ratio is 2.3 x $10^{-6}$ (1/N) or smaller.

4. The continuously variable transmission (10) according to any one of Claims 1 to 3,

wherein
a position of a contact point (C) between the pin (42) and the conical surface (24, 26, 34, 36) is shifted in a radial direction of the pulley (12, 14) toward an outer side in the radial direction by 0.16 or greater from a center line (s) of the pin (42), assuming that a dimension of the pin (42) in the radial direction is 1.

5. The continuously variable transmission (10) according to Claim 4 , wherein the shift is 0.38 or smaller.


**Patentansprüche**

1. Durchgehend-variables-Getriebe (10) mit:

    zwei Schwungscheiben (12, 14), die jeweils gegenüberliegende konische Flächen (24, 26; 34, 36) aufweisen, wobei ein Abstand zwischen diesen variabel ist; und
    eine Kette (16), die um die zwei Schwungscheiben (12, 14) gewickelt ist und die zwischen den konische Flächen (24, 26; 34, 36) eingespannt ist, wobei
    die Kette (16) durch Koppeln von Kettengliedern (44) gebildet ist, wobei jedes Kettenglied eine Verbindungseinheit, in der eine Mehrzahl von Verbindungen , die jeweilig eine Öffnung (38) aufweisen und platziert sind, um sich in Umfangsrichtung der Kette (16) zu erstrecken, in Breitenrichtung der Kette (16) angeordnet sind, und zwei Bolzen (42), die sich durch die Öffnung (38) der jeweiligen Verbindungen an beiden Enden der Verbindung erstrecken, aufweist, wobei beide Enden von zumindest einem Bolzen (42) in Kontakt mit den konischen Flächen (24, 26; 34, 36) kommen, in denen die Kettenglieder (44) derart gekoppelt sind, dass der Bolzen von einem von zwei Kettengliedern (44), die in Umfangsrichtung der Kette (16) zueinander benachbarten sind, durch die Öffnung (38) der Verbindung des anderen Kettengliedes hindurchgehen gelassen wird, und
    wenn der Bolzen (42) durch die Schwungscheibe (12, 14) eingeklemmt ist, ein Verformungsverhältnis einer Bolzenlänge als $\Delta L/(F \times L)$ definiert ist, wobei:

        L die freie Länge des Bolzens (42) entlang dessen Mittellinie ist;
        $\Delta L$ die Größe einer Änderung bei der Länge des Bolzens (42) ist; und
        F die Last von der Schwungscheibe (12, 14) in der Mittellinienrichtung des Bolzens (42) ist, **dadurch gekennzeichnet, dass**
        das Verformungsverhältnis $1,3 \times 10^{-6}$ (1/N) oder größer ist.

2. Durchgehend-variables-Getriebe (10) nach Anspruch 1, wobei
die Bolzen (42) in Umfangsrichtung der Kette (16) mit einer zufälligen Teilung angeordnet sind.

3. Durchgehend-variables-Getriebe (10) nach Anspruch 1 oder 2, wobei das Verformungsverhältnis $2,3 \times 10^{-6}$ (1/N) oder kleiner ist.

4. Durchgehend-variables-Getriebe (10) nach einem der Ansprüche 1 bis 3, wobei
eine Position eines Kontaktpunktes (C) zwischen dem Bolzen (42) und der konischen Fläche (24, 26, 34, 36) in Radialrichtung der Schwungscheibe (12, 14) in Radialrichtung zu einer Außenseite hin um 0,16 oder mehr von einer Mittellinie (s) des Bolzens (42) verschoben ist, unter der Annahme, dass eine Abmessung des Bolzens (42) in Radialrichtung 1 ist.

5. Durchgehend-variables-Getriebe (10) nach Anspruch 4, wobei die Verschiebung 0,38 oder kleiner ist.


**Revendications**

1. Transmission variable en continu (10) comprenant :

    deux poulies (12, 14) ayant chacune des surfaces coniques opposées (24, 26 ; 34, 36), une distance entre elles étant variable ; et
    une chaîne (16) qui est enroulée autour des deux poulies (12, 14) et est serrée entre les surfaces coniques (24, 26 ; 34, 36),
    dans laquelle
    la chaîne (16) est formée en couplant des éléments de chaîne (44), chaque élément de chaîne comprenant une unité à maillons dans lequel une pluralité de maillons, ayant chacun une ouverture (38) et étant placé pour s'étendre dans une direction circonférentielle de la chaîne (16), sont disposés dans une direction de la largeur de la chaîne (16) et deux axes (42) qui s'étendent à travers l'ouverture (38) des maillons respectifs aux deux extrémités du maillon, les deux extrémités de l'au moins un axe (42) entrant en contact avec les surfaces coniques (24, 26 ; 34, 36), dans lesquelles les éléments de chaîne (44) sont couplés de façon à ce que l'axe de l'un des deux éléments de chaîne (44) qui sont adjacents entre eux dans la direction circonférentielle de la chaîne (16) soit passé à travers l'ouverture (38) du maillon de l'autre élément de chaîne et

lorsque l'axe (42) est serré par la poulie (12, 14), un rapport de déformation de la longueur d'axe est définie comme $\Delta L/(F \times L)$,

L étant la longueur libre de l'axe (42) le long de la ligne centrale de celui-ci ;

$\Delta L$ étant la quantité de variation de la longueur de l'axe (42) ; et

F étant la charge de la poulie (12, 14) dans la direction de la ligne centrale de l'axe (42),

**caractérisée en ce que**

le rapport de déformation est égal à $1,3 \times 10^{-6}$ (1/N) ou plus.

2. Transmission variable en continu (10) selon la revendication 1, dans laquelle les axes (42) sont disposés à un pas aléatoire dans la direction circonférentielle de la chaîne (16).

3. Transmission variable en continu (10) selon la revendication 1 ou 2, dans laquelle le rapport de déformation est égal à $2,3 \times 10^{-6}$ (1/N) ou moins.

4. Transmission variable en continu (10) selon l'une des revendications 1 à 3, dans laquelle
une position d'un point de contact (C) entre l'axe (42) et la surface conique (24, 26 ; 34, 36) est décalée dans une direction radiale de la poulie (12, 14) en direction d'un côté extérieur dans la direction radiale de 0,16 ou plus à partir d'une ligne central (s) de l'axe (42), en supposant qu'une dimension de l'axe (42) dans la direction radiale est égale à 1.

5. Transmission variable en continu (10) selon la revendication 4, dans laquelle le décalage est égal à 0,38 ou moins.

FIG. 1

FIG. 2

FIG. 3

42a
( 42a-3 )

42a
( 42a-1 )

42b
( 42b-3 )

42a
( 42a-2 )

42b
( 42b-1 )

40    40

① ② ③ ④ ⑤ ⑥ ⑦ ⑧ ⑨ ⑩ ⑪ ⑫ ⑬

FIG. 4

FIG. 5

FIG. 6

FIG. 7

SOUND PRESSURE
( OA VALUE)
IN 3 TO 5 KHz RANGE [dB]

A1

Δ 3dB

B1

REFERENCE

ABOUT 1.5
TIMES

E1

DEFORMATION RATIO OF PIN LENGTH [1/N]

FIG. 8

SOUND PRESSURE
( OA VALUE)
IN 3 TO 5 KHz RANGE [dB]

A2

B2

Δ 3dB

REFERENCE (CONTACT POINT: CENTER)

E2

SHIFT RATIO OF CONTACT POINT

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7167224 A
- EP 1862700 A2
- EP 2034215 A1
- EP 2090805 A1
- EP 1845286 A1